# EUROPÄISCHE PATENTSCHRIFT

(11) **EP 1 896 667 B1**
(45) Veröffentlichungstag und Bekanntmachung des Hinweises auf die Patenterteilung: **16.03.2016**
(21) Anmeldenummer: 06754569.9
(22) Anmeldetag: 26.06.2006
(51) Int. Cl.: E03F 5/02, E02D 29/12, F16L 9/128, E06C 9/04

(54) **SCHACHTMITTELTEIL**
SHAFT CENTRE PART
ELEMENT MEDIAN DE PUITS

(30) Priorität: 29.06.2005 DE 202005010488 U
(43) Veröffentlichungstag der Anmeldung: 12.03.2008
(73) Patentinhaber: REHAU AG + Co, 95111 Rehau (DE)
(72) Erfinder: HEGER, Tobias, 38106 Braunschweig (DE); KANIA, Guido, 91080 Marloffstein (DE); HENDEL, Roland, 91086 Aurachtal (DE); CIOLAK, Mariusz, 91052 Erlangen (DE); LEIHBECHER, Heiko, 90530 Wendelstein (DE)
(86) Internationale Anmeldenummer: PCT/EP2006/006133
(87) Internationale Veröffentlichungsnummer: WO 2007/000298

(56) Entgegenhaltungen:
- DE-U1- 8 500 005
- DE-U1- 29 503 005
- FR-A- 2 100 137

## Beschreibung

Die Erfindung betrifft ein Schachtmittelteil gemäß dem Oberbegriff des Anspruches 1.

Schachtmittelteile sind vielfach im Stand der Technik bekannt. Sie werden bei an sich bekannten Schächten, beispielsweise Abwasserschächten, als Verbindungselement zwischen einem Schachtunterteil und einem weiteren Schachtmittelteil oder einem Schachtoberteil eingesetzt. Die Schachtmittelteile weisen hierzu unterschiedliche Geometrien, insbesondere unterschiedliche Bauhöhen, auf, um unterschiedliche Höhen derartiger Abwasserschächte realisieren zu können. An ihren freien Enden weisen die Schachtmittelteile entsprechende Verbindungselemente auf, die so ausgelegt sind, dass diese mit einem Schachtunterteil, einem Schachtoberteil oder einem weiteren Schachtmittelteil verbindbar sind. Weiterhin sind bei den Schachtmittelteilen aus dem bekannten Stand der Technik Verstärkungselemente angeordnet, die die Stabilität des Schachtmittelteils sowie des beispielsweise Abwasserschachtes positiv beeinflussen sollen. Die bekannten Schachtmittelteile weisen jedoch bei Verstärkungselementen, die beispielsweise als Rippen umlaufend an der Außenoberfläche ausgebildet sind, den Nachteil auf, dass derartige Verstärkungselemente in einem viel zu großen oder auch in einem viel zu kleinen Abstand zueinander angeordnet sind. Eine zu weite Anordnung der Verstärkungselemente führt dazu, dass die Schachtmittelteile eine sehr geringe Ringsteifigkeit aufweisen. Nachteilig bei zu nah aneinander angeordneten Verstärkungselementen ist, dass derartige Schachtmittelteile sich während der Einbauphase nur sehr schlecht verfüllen lassen, da das Verfüllmaterial nur schlecht zwischen die engen Zwischenräume der Verstärkungselemente gelangen kann und somit eine homogene Verdichtung des Verfüllmaterials für beispielsweise einen Abwasserschacht nicht gewährleistet werden kann. Hierdurch kann es negativerweise zu einer Verformung des Schachtmittelteils bzw. auch des Abwasserschachtes kommen, der von seiner beispielsweise runden Geometrie in eine ovale Form deformiert wird.

Ein weiterer sich daraus ergebender Nachteil besteht darin, dass im Verbindungsbereich zwischen dem Schachtmittelteil und dem Schachtunterteil bzw. dem Schachtoberteil die dort angeordneten Dichtelemente nicht mehr vollumfänglich wirken können, so dass in diesen Bereichen Undichtigkeiten auftreten. Ein weiterer Nachteil bekannter Schachtmittelteile besteht darin, dass diese bisher keine Möglichkeiten zum sicheren Befestigen an Hebezeugen aufweisen und somit erhöhte Unfallgefahr beim Anheben, Transportieren und Montieren vor Ort auf der Baustelle besteht. Eine Montage dieser Schachtmittelteile ist sehr zeit- und somit kostenaufwändig.

Die FR 2 100 137 A weist einen Flüssigkeitsbehälter auf, insbesondere für Wein.

Aus DE 85 00 005 U1 ist ein Gegenstand mit den Merkmalen des Oberbegriffs des Anspruchs 1 bekannt. Es offenbart einen Fertigschacht zur Aufnahme einer Pumpstation für die Abwasserentsorgung. Der vorbekannte Schacht weist mehrere ringförmige Verlängerungselemente mit Verstärkungsrippen auf.

Die DE 295 03 005 U1 zeigt einen Speichertank für Regenwasser, bei dem zur mechanischen Verstärkung Doppelrippen vorgesehen sind.

Es ist die Aufgabe der Erfindung, die vorstehend beschriebenen Nachteile des bekannten Standes der Technik zu überwinden und ein Schachtmittelteil aufzuzeigen, welches wirtschaftlich und kostengünstig hergestellt werden kann, weiches eine hohe Ringsteifigkeit aufweist, welches leicht und sicher anhebbar, transportierbar bzw. montierbar ist und bei dem sich das umgebende Erdreich am Schachtmittelteil gut und sicher verfüllen bzw. verdichten lässt.

Erfindungsgemäß wird dies durch die kennzeichnenden Merkmale des Anspruches 1 gelöst. Weitere vorteilhafte Ausgestaltungen sind in den Unteransprüchen beschrieben.

Das erfindungsgemäße Schachtmittelteil zeichnet sich dadurch aus, dass die Verstärkungselemente etwa parallel in Umfangrichtung angeordnet sind, wobei der Achsabstand zwischen einem Paar Verstärkungselementen etwa der Differenz der Radien der Verstärkungselemente und des Schachtmittelteils beträgt und wobei der Achsabstand zwischen einem ersten Paar Verstärkungselementen zu einem zweiten Paar Verstärkungselementen wenigstens der doppelten Differenz der Radien der Verstärkungselemente und des Schachtmittelteils beträgt. Es konnte festgestellt werden, dass durch eine paarweise Anordnung von Verstärkungselementen in einer bestimmten Dimensionierung zu den Außenabmessungen des Schachtmittelteils eine gleichmäßige symmetrische Krafteinleitung des Erddruckes auf die montierten erfindungsgemäßen Schachtmittelteile gewährleistet werden kann. Ein weiterer Vorteil der erfindungsgemäßen Schachtmittelteile besteht darin, dass eine Optimierung der Ringsteifigkeit erzielbar ist, ohne dass das erfindungsgemäße Schachtmittelteil über eine Vielzahl von Verstärkungselementen verfügen muss.
Ein weiterer Vorteil besteht darin, dass die Verstärkungselemente so paarweise angeordnet sind, dass sie jeweils eine Dichtkammer bilden können, wobei eine sich in dieser Dichtkammer befindliche Dichtung vorteilhafterweise lastunabhängig wirkt.

Es hat sich weiter vorteilhaft erwiesen, dass die Verstärkungselemente als Rippen und/oder als Wulst ausgebildet sind, so dass das erfindungsgemäße Schachtmittelteil Ringsteifigkeiten von ≥ 2,0 kN/m² aufweist.
Weiterhin vorteilhaft hat sich erwiesen, dass die Verstärkungselemente des erfindungsgemäßen Schachtmittelteils trapezförmig ausgebildet sind, so dass die verschiedensten Bodenarten zum Verfüllen der Schachtmittelteile verwendet und gemäß den Einbauanforderungen verdichtet werden können.

In einer weiteren vorteilhaften Ausgestaltungsform weist das erfindungsgemäße Schachtmittelteil zwischen den Verstärkungselementen ein Halteelement und/oder ein Sicherungselement auf. Diese Halteelemente und/oder Sicherungselemente dienen einerseits der sicheren, schnellen und einfachen Handhabung bei Hebe- und Transportvorgängen der erfindungsgemäßen Schachtmittelteile über entsprechende Hebezeuge bzw. auch einem manuellen Transport durch entsprechende Arbeitskräfte und sind andererseits gleichzeitig vorteilhaft als Möglichkeit der Sicherung der erfindungsgemäßen Schachtmittelteile bei Transporten auf Fahrzeugen. Ein weiterer Vorteil der Halteelemente und/oder Sicherungselemente wird darin gesehen, dass es hierdurch möglich ist, das erfindungsgemäße Schachtmittelteil mit beispielsweise einem darunter befindlichen Schachtunterteil über weitere Sicherungs- und Befestigungselemente zu verbinden.
Ein weiterer Vorteil des erfindungsgemäßen Schachtmittelteils besteht darin, dass das Verbindungselement über wenigstens ein Sicherungselement mit dem Verstärkungselement verbunden ist, so dass dieses Sicherungselement vorteilhaft als Transportsicherung verwendbar ist, aber auch über zusätzliche Befestigungselemente mit einem darunter montierten Schachtunterteil oder Schachtmittelteil beispielsweise längskraftschlüssig verbindbar ist.

In einer weiteren sehr vorteilhaften Ausgestaltungsform weist das erfindungsgemäße Schachtmittelteil Markierungselemente auf. Diese Markierungselemente sind vorteilhafterweise in den Bereichen angeordnet, die bei der Montage des erfindungsgemäßen Schachtmittelteils auf beispielsweise Schachtunterteile oder Schachtmittelteile für das Montagepersonal leicht einsehbar sind, so dass die Montage und Ausrichtung schnell und zielgerichtet erfolgen kann, insbesondere dann, wenn das darunter liegende Schachtunterteil ein gleichartiges Markierungselement aufweist.

In einer weiteren vorteilhaften Ausgestaltung des erfindungsgemäßen Schachtmittelteils sind die Markierungselemente so angeordnet, dass sie die Lage der im Inneren des Schachtmittelteils anliegenden Steigleiter anzeigen, so dass die beispielsweise innenliegenden Steigstufen der erfindungsgemäßen Schachtmittelteile des Schachtes von der Auβenseite gegeneinander ausgerichtet werden können.

Weiterhin vorteilhaft bei dem erfindungsgemäßen Schachtmittelteil wird gesehen, dass der Außendurchmesser der Verstärkungselemente etwa dem Innendurchmesser des Verbindungselementes entspricht. Hierdurch kann gewährleistet werden, dass das erfindungsgemäße Schachtmittelteil in Verbindung mit einer entsprechenden Dichtung mit großer Sicherheit dicht auf ein darunter befindliches Schachtmittelteil oder Schachtunterteil aufsetzbar ist.
Bei dem erfindungsgemäßen Schachtmittelteil sind vorteilhafterweise die Halteelemente und/oder Sicherungselemente als die Verstärkungselemente verbindenden Stege ausgebildet. Somit kann vorteilhafterweise erreicht werden, dass die dabei entstehenden Öffnungen in ihrer Größe maximiert werden, ohne dass das erfindungsgemäße Schachtmittelteil beispielsweise montagestörende Abmessungen aufweist.

In einer weiter ebenfalls vorteilhaften Ausgestaltung des erfindungsgemäßen Schachtmittelteils bilden die als Stege ausgebildeten Halteelemente und/oder Sicherungselemente mit den Verstärkungselementen und der Außenwand des Schachtmittelteils eine Öffnung mit einer Fläche von etwa 5 bis 50 cm², vorzugsweise 10 bis 30 cm². Hierdurch ist bei dem erfindungsgemäßen Schachtmittelteil gewährleistet, dass ein Anheben und Transportieren über Hebezeuge, wie beispielsweise Kranhaken oder Transportbänder, problemlos und sicher möglich ist, aber auch ein manueller Transport, da die so ausgebildeten Halteelemente und/oder Sicherungselemente vom Montagepersonal als Griffe verwendet werden können.

In einer vorteilhaften Ausführungsform des erfindungsgemäßen Schachtmittelteils sind zwischen den paarweise angeordneten Verstärkungselementen Führungselemente angeordnet. Diese Führungselemente dienen einerseits einer weiteren Optimierung der Ringsteifigkeit des erfindungsgemäßen Schachtmittelteils, wobei zusätzlich die zwischen die Verstärkungselemente einführbaren Dichtelemente durch dieses Führungselement einfacher und dauerhafter positionierbar sind.
Es wurde vorteilhafterweise gefunden, dass das Führungselement optimal mittig zwischen den paarweise angeordneten Verstärkungselementen angeordnet ist, so dass ein in diesem Zwischenraum einzubringendes Dichtelement sehr leicht in seiner Lage fixierbar ist. Es liegt jedoch auch im Rahmen der Erfindung, dass ein derartiges Führungselement so ausgestaltet ist, dass ein in den Zwischenraum der paarweise angeordneten Verstärkungselemente einzubringendes Dichtelement mit diesem verrastbar ist.
Weiterhin vorteilhaft bei dem erfindungsgemäßen Schachtmittelteil wird gesehen, dass das Führungselement etwa die halbe Wandstärke der Verstärkungselemente aufweist, so dass neben einer Optimierung der Ringsteifigkeit des erfindungsgemäßen Schachtmittelteils die in den Zwischenraum zwischen den Verstärkungselementen einbringbare Dichtung optimal positionierbar und führbar ist.

Das erfindungsgemäße Schachtmittelteil kann beispielsweise aus Polyolefin bestehen. Der Einsatz eines Polyolefins, wie z.B. Polypropylen, führt vorteilhafterweise dazu, dass das Schachtmittelteil eine hohe Ringsteifigkeit bei ausgezeichneter Schlagzähigkeit aufweist.

Durch den Einsatz eines thermoplastisch verarbeitbaren Materials für das erfindungsgemäβe Schachtmittelteil ist es auch jederzeit möglich, die von Normen bzw. Kunden geforderten Farben für diese erfindungsgemäßen Schachtmittelteile zu realisieren. So hat es sich als besonders vorteilhaft herausgestellt, dass das erfindungsgemäße Schachtmittelteil in Orangebraun ausgeführt ist, so dass die Inspektionsfreundlichkeit der bereits montierten erfindungsgemäßen Schachtmittelteile stark erhöht, aber auch eine einfachere Montage möglich ist.

Die Erfindung soll nun an einem diese nicht einschränkenden Ausführungsbeispiel näher beschrieben Werde.

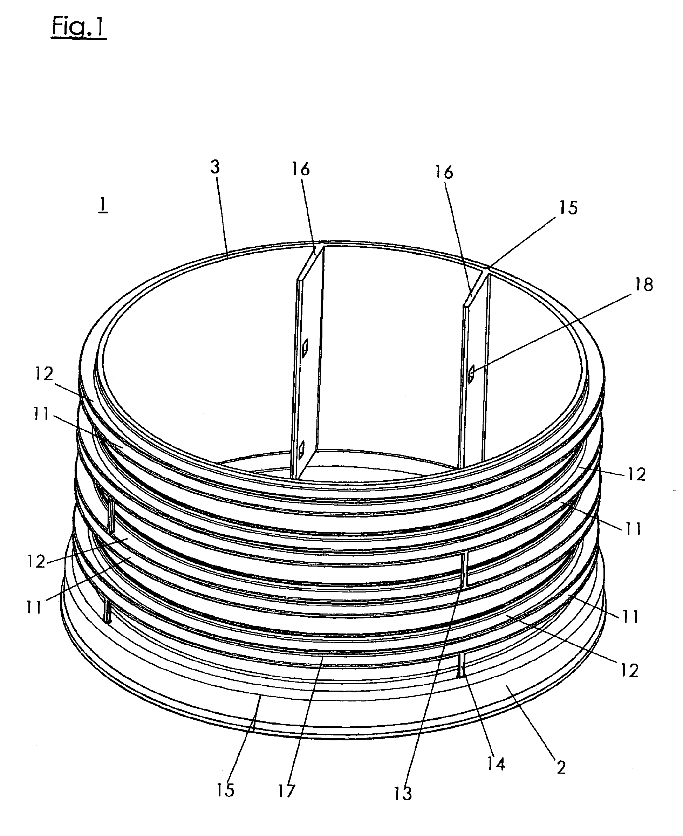

Es zeigt: Fig. 1 ein erfindungsgemäßes Schachtmittelteil.

In Fig. 1 ist ein erfindungsgemäßes Schachtmittelteil 1 dargestellt. Dieses Schachtmittelteil 1 ist als Ring mit einem bestimmten Außendurchmesser ausgebildet. An der Außenseite des Schachtmittelteils 1 sind die Verstärkungselemente 11, 12 in etwa parallel zueinander in Umfangsrichtung angeordnet.

Je nach Höhe des Schachtmittelteils ist eine entsprechende Anzahl von paarweise nebeneinander angeordneten Verstärkungselementen 11, 12 in Umfangsrichtung des Schachtmittelteils 1 erforderlich. Der Achsabstand zwischen einem Paar Verstärkungselemente 11, 12 beträgt etwa der Differenz aus Außenradius der Verstärkungselemente 11, 12 und Schachtwand 3 des Schachtmittelteils 1. In diesem Ausführungsbeispiel beträgt der Abstand etwa 35 mm. Der Abstand zwischen einem ersten Paar Verstärkungselemente 11, 12 zu einem zweiten Paar Verstärkungselemente 11, 12 beträgt etwa der doppelten Differenz aus Außenradius der Verstärkungselemente 11, 12 und Schachtwand 3 des Schachtmittelteils 1, in diesem Ausführungsbeispiel etwa 90 mm. Die Verstärkungselemente 11, 12 sind als Rippen ausgebildet, die einen etwa trapezförmigen Querschnitt aufweisen. Zwischen den Verstärkungselementen 11, 12 ist ein Führungselement 17 angeordnet, welches etwa wulstförmig ausgebildet ist und in etwa die halbe Wandstärke der Verstärkungselemente 11, 12 aufweist. Am unteren freien Ende des Schachtmittelteils 1 ist ein Verbindungselement 2 dargestellt, welches dazu dient, das erfindungsgemäße Schachtmittelteil 1 auf beispielsweise ein Schachtunterteil oder ein weiteres Schachtmittelteil zu montieren. Am Verbindungselement 2 des Schachtmittelteils 1 ist mindestens ein, in diesem Ausführungsbeispiel zwei, Markierungselement 15 angeordnet, welches die Ausrichtung des Schachtmittelteils 1 auf einem Schachtunterteil oder Schachtmittelteil, welches hier nicht dargestellt ist, ermöglicht. In diesem Ausführungsbeispiel sind am Verbindungselement 2 vier Sicherungselemente 14 angeordnet, welche als Steg zwischen dem Verbindungselement 2 und einem Verstärkungselement 11 angeordnet sind. Die sich aus diesem als Steg ausgebildeten Sicherungselement 14, dem Verstärkungselement 11, der Außenwand 3 des Schachtmittelteils 1 und dem Verbindungselement 2 ergebende Öffnung weist eine Fläche von ca. 13 cm² auf, so dass mit diesem Sicherungselement 14 und einem diametral angeordneten hier nicht dargestellten Sicherungselement der Transport des Schachtmittelteils 1 auf einem Fahrzeug jederzeit gesichert und die Aufnahmemöglichkeit eines zusätzlichen Befestigungselements gewährleistet ist. Das erfindungsgemäße Schachtmittelteil 1 weist in dieser Ausführungsform zwischen zwei paarweise nebeneinander angeordneten Verstärkungselementen 11, 12 ein Halteelement 13 auf, mit dem das Verstärkungselement 11 mit dem Verstärkungselement 12 verbunden ist. Das Halteelement 13 und die Verstärkungselemente 11, 12 sowie die Außenwand 3 des Schachtmittelteils 1 bilden eine Öffnung, die etwa eine Fläche von 20 cm² aufweist und die insbesondere bei der Montage des erfindungsgemäßen Schachtmittelteils 1 einerseits als Einhängelement für beispielsweise einen Kranhaken dient, aber andererseits auch als Griff für das Montagepersonal verwendbar ist.

In einer weiteren vorteilhaften Ausführungsform weist das erfindungsgemäße Schachtmittelteil 1 im Inneren zwei Konsolenelemente 16 auf, die etwa prismenförmig ausgebildet sind und die mit ihrer einen Stirnseite mit der Innenseite der Schachtwand 3 des Schachtmittelteils 1 verbunden sind. In diesem Ausführungsbeispiel sind die Konsolenelemente 16 einstückig mit dem Schachtmittelteil 1 verbunden. In die Konsolenelemente 16 sind Öffnungen 18 eingebracht, die der Aufnahme von Steigelementen wie beispielsweise Sprossen, die hier nicht dargestellt sind, dienen. An der den Konsolenelementen 16 gegenüberliegenden Außenseite des Schachtmittelteils 1 sind Markierungselemente 15 angeordnet, die in dieser Darstellung nicht sichtbar sind, die dazu dienen, bei der Montage der erfindungsgemäßen Schachtmittelteile 1 die innenliegenden Sprossen mit den Sprossen eines darüber oder darunter befindlichen Schachtbauteils, welches vorteilhafterweise die gleiche Markierung besitzt, lotrecht zueinander von der Außenseite her auszurichten.
Das erfindungsgemäße Schachtmittelteil 1 ist in diesem Ausführungsbeispiel aus einem thermoplastisch verarbeitbaren Werkstoff wie Polypropylen hergestellt, was das erfindungsgemäße Schachtmittelteil 1 hinsichtlich Korrosion oder anderen vorzugsweise chemischen Angriffen resistent macht. Ein weiterer Vorteil des erfindungsgemäßen Schachtmittelteils 1 besteht darin, dass es aufgrund des verwendeten thermoplastischen verarbeitbaren Werkstoffes jederzeit wieder problemlos recycelbar ist. Durch die Verwendung eines erfindungsgemäßen Schachtmittelteils 1, welches aus einem thermoplastisch verarbeitbaren Polypropylen-Werkstoff besteht, der Orangebraun eingefärbt ist, ist zum einen eine extreme Gewichtsreduzierung von 95%, beispielsweise zu derartigen Schachtmittelteilen, die bisher aus Beton hergestellt sind möglich und andererseits ist dieses Schachtmittelteil 1 sehr inspektionsfreundlich, da in einem verbauten bzw. verfüllten Schacht dieser leichter und besser inspizierbar ist.

## Patentansprüche

1. Schachtmittelteil (1), das als Ring ausgebildet ist, im Erdreich anordenbar ist und an dem sich das umgebende Erdreich verfüllen lässt, wobei das Schachtmittelteil (1) geeignet für eine dichtende, aufsteckbare und/oder verrastbare Verbindung zu einem Schachtunterteil und/oder Schachtoberteil und/oder weiteren Schachtmittelteil ist, wobei das Schachtmittelteil an wenigstens einem freien Ende ein Verbindungselement (2) aufweist, wobei das Schachtmittelteil (1) Verstärkungselemente (11, 12) aufweist, wobei die Verstärkungselemente (11, 12) etwa parallel in Umfangsrichtung angeordnet sind, **dadurch gekennzeichnet, dass** die Verstärkungselemente (11, 12) paarweise angeordnet sind, wobei der Achsabstand zwischen den Verstärkungselementen (11, 12) eines Verstärkungselementenpaares etwa der Differenz aus Außenradius der Verstärkungselemente (11, 12) und Schachtwand (3) des Schachtmittelteils (1) beträgt und wobei der Achsabstand zwischen einem ersten Paar Verstärkungselemente (11, 12) zu einem zweiten Paar Verstärkungselemente (11, 12) wenigstens der doppelten Differenz aus Außenradius der Verstärkungselemente (11, 12) und Schachtwand (3) des Schachtmittelteils (1) beträgt.

2. Schachtmittelteil nach Anspruch 1, **dadurch gekennzeichnet, dass** die Verstärkungselemente (11, 12) als Rippen ausgebildet sind.

3. Schachtmittelteil nach Anspruch 1, **dadurch gekennzeichnet, dass** die Verstärkungselemente (11, 12) als Wulst ausgebildet sind.

4. Schachtmittelteil nach Anspruch 1, **dadurch gekennzeichnet, dass** die Verstärkungselemente (11, 12) trapezförmig ausgebildet sind.

5. Schachtmittelteil nach Anspruch 1 bis 4, **dadurch gekennzeichnet, dass** zwischen dem ersten Verstärkungselement (11) und dem zweiten Verstärkungselement (12) ein Halteelement (13) und/oder ein Sicherungselement (14) angeordnet ist.

6. Schachtmittelteil nach Anspruch 1 bis 5, **dadurch gekennzeichnet, dass** das Verbindungselement (2) über wenigstens ein Sicherungselement (14) mit einem Verstärkungselement (11, 12) verbunden ist.

7. Schachtmittelteil nach Anspruch 1 bis 6, **dadurch gekennzeichnet, dass** an der Außenseite des Schachtmittelteils (1) Markierungselemente (15) angeordnet sind.

8. Schachtmittelteil nach Anspruch 1 bis 7, **dadurch gekennzeichnet, dass** der Außendurchmesser der Verstärkungselemente (11, 12) etwa dem Innendurchmesser im Verbindungselement (2) entspricht.

9. Schachtmittelteil nach Anspruch 5, **dadurch gekennzeichnet, dass** die Halteelemente (13) und/oder Sicherungselemente (14) als die Verstärkungselemente (11, 12) verbindenden Stege ausgebildet sind.

10. Schachtmittelteil nach Anspruch 9, **dadurch gekennzeichnet, dass** die als Stege ausgebildeten Halteelemente (13) und/oder Sicherungselemente (14) mit den Verstärkungselementen (11, 12) und der Außenwand (3) des Schachtmittelteils (1) eine Fläche von etwa 5 bis 50 cm², vorzugsweise 10 bis 30 cm² bilden.

11. Schachtmittelteil nach Anspruch 1 bis 10, **dadurch gekennzeichnet, dass** zwischen den Verstärkungselementen (11, 12) ein Führungselement (17) angeordnet ist.

12. Schachtmittelteil nach Anspruch 11, **dadurch gekennzeichnet, dass** das Führungselement (17) etwa mittig zwischen dem ersten Verstärkungselement (11) und dem zweiten Verstärkungselement (12) angeordnet ist.

13. Schachtmittelteil nach Anspruch 12, **dadurch gekennzeichnet, dass** das Führungselement (17) etwa die halbe Wandstärke der Verstärkungselemente (11, 12) aufweist.

14. Schachtmittelteil nach Anspruch 1 bis 13, **dadurch gekennzeichnet, dass** es aus einem thermoplastisch verarbeitbaren Werkstoff besteht.

15. Schachtmittelteil nach Anspruch 1 bis 14, **dadurch gekennzeichnet, dass** es etwa Orangebraun ausgebildet ist.

## Claims

1. Shaft centre part (1) which is formed as a ring, can be arranged in the ground and on which the surrounding ground can be filled, wherein the shaft centre part (1) is suitable for a sealing, plug-on and/or latchable connection with a shaft lower part and/or a shaft upper part and/or a further shaft centre part, wherein the shaft centre part has a connecting element (2) at at least one free end, wherein the shaft centre part (1) has reinforcing elements (11, 12), wherein the reinforcing elements (11, 12) are arranged approximately parallel in the circumferential direction, **characterized in that** the reinforcing elements (11, 12) are arranged in pairs, wherein the axial distance between the reinforcing elements (11, 12) of a reinforcing element pair is approximately the difference between the external radius of the reinforcing elements (11, 12) and the shaft wall (3) of the shaft centre part (1) and wherein the axial distance between a first pair of reinforcing elements (11, 12) and a second pair of reinforcing elements (11, 12) is at least double the difference between the external radius of the reinforcing elements (11, 12) and the shaft wall (3) of the shaft centre part (1).

2. Shaft centre part according to Claim 1, **characterized in that** the reinforcing elements (11, 12) are formed as ribs.

3. Shaft centre part according to Claim 1, **characterized in that** the reinforcing elements (11, 12) are formed as beads.

4. Shaft centre part according to Claim 1, **characterized in that** the reinforcing elements (11, 12) are trapezoidal.

5. Shaft centre part according to Claims 1 to 4, **characterized in that** a retaining element (13) and/or a securing element (14) is arranged between the first reinforcing element (11) and the second reinforcing element (12).

6. Shaft centre part according to Claims 1 to 5, **characterized in that** the connecting element (2) is connected to a reinforcing element (11, 12) via at least one securing element (14).

7. Shaft centre part according to Claims 1 to 6, **characterized in that** marking elements (15) are arranged on the outer side of the shaft centre part (1).

8. Shaft centre part according to Claims 1 to 7, **characterized in that** the outside diameter of the reinforcing elements (11, 12) corresponds approximately to the inside diameter in the connecting element (2).

9. Shaft centre part according to Claim 5, **characterized in that** the retaining elements (13) and/or securing elements (14) are formed as webs connecting the reinforcing elements (11, 12).

10. Shaft centre part according to Claim 9, **characterized in that** the retaining elements (13) and/or securing elements (14) formed as webs form an area of approximately 5 to 50 cm², preferably 10 to 30 cm², with the reinforcing elements (11, 12) and the outer wall (3) of the shaft centre part (1).

11. Shaft centre part according to Claims 1 to 10, **characterized in that** a guide element (17) is arranged between the reinforcing elements (11, 12).

12. Shaft centre part according to Claim 11, **characterized in that** the guide element (17) is arranged approximately centrally between the first reinforcing element (11) and the second reinforcing element (12).

13. Shaft centre part according to Claim 12, **characterized in that** the guide element (17) has approximately half the wall thickness of the reinforcing elements (11, 12).

14. Shaft centre part according to Claims 1 to 13, **characterized in that** it consists of a thermo-plastically processable material.

15. Shaft centre part according to Claims 1 to 14, **characterized in that** it is designed to be approximately orange-brown.

## Revendications

1. Elément médian de puits (1), réalisé sous forme d'anneau, pouvant être disposé dans la terre et au niveau duquel la terre environnante peut être remplie, l'élément médian de puits (1) étant adapté pour une connexion hermétique, enfichable et/ou emboîtable avec un élément inférieur de puits et/ou un élément supérieur de puits et/ou un autre élément médian de puits, l'élément médian de puits présentant un élément de connexion (2) au niveau d'au moins une extrémité libre, l'élément médian de puits (1) présentant des éléments de renforcement (11, 12), les éléments de renforcement (11, 12) étant disposés approximativement parallèlement dans la direction périphérique, **caractérisé en ce que** les éléments de renforcement (11, 12) sont disposés par paires, la distance axiale entre les éléments de renforcement (11, 12) d'une paire d'éléments de renforcement valant approximativement la différence entre le rayon extérieur des éléments de renforcement (11, 12) et la paroi de puits (3) de l'élément médian de puits (1), et la distance axiale entre une première paire d'éléments de renforcement (11, 12) et une deuxième paire d'éléments de renforcement (11, 12) valant au moins le double de la différence entre le rayon extérieur des éléments de renforcement (11, 12) et la paroi de puits (3) de l'élément médian de puits (1).

2. Elément médian de puits selon la revendication 1, **caractérisé en ce que** les éléments de renforcement (11, 12) sont réalisés sous forme de nervures.

3. Elément médian de puits selon la revendication 1, **caractérisé en ce que** les éléments de renforcement (11, 12) sont réalisés sous forme de bourrelet.

4. Elément médian de puits selon la revendication 1, **caractérisé en ce que** les éléments de renforcement (11, 12) sont réalisés en forme de trapèze.

5. Elément médian de puits selon les revendications 1 à 4, **caractérisé en ce qu'**entre le premier élément de renforcement (11) et le deuxième élément de renforcement (12) est disposé un élément de retenue (13) et/ou un élément de fixation (14).

6. Elément médian de puits selon les revendications 1 à 5, **caractérisé en ce que** l'élément de connexion (2) est connecté à un élément de renforcement (11, 12) par le biais d'au moins un élément de fixation (14).

7. Elément médian de puits selon les revendications 1 à 6, **caractérisé en ce que** des éléments de marquage (15) sont disposés au niveau du côté extérieur de l'élément médian de puits (1).

8. Elément médian de puits selon les revendications 1 à 7, **caractérisé en ce que** le diamètre extérieur des éléments de renforcement (11, 12) correspond approximativement au diamètre intérieur dans l'élément de connexion (2).

9. Elément médian de puits selon la revendication 5, **caractérisé en ce que** les éléments de retenue (13) et/ou les éléments de fixation (14) sont réalisés sous forme de nervures reliant les éléments de renforcement (11, 12).

10. Elément médian de puits selon la revendication 9, **caractérisé en ce que** les éléments de retenue (13) réalisés sous forme de nervures et/ou les éléments de fixation (14) forment avec les éléments de renforcement (11, 12) et la paroi extérieure (3) de l'élément médian de puits (1) une surface d'environ 5 à 50 cm², de préférence de 10 à 30 cm².

11. Elément médian de puits selon les revendications 1 à 10, **caractérisé en ce qu'**entre les éléments de renforcement (11, 12) est disposé un élément de guidage (17).

12. Elément médian de puits selon la revendication 11, **caractérisé en ce que** l'élément de guidage (17) est disposé approximativement centralement entre le premier élément de renforcement (11) et le deuxième élément de renforcement (12).

13. Elément médian de puits selon la revendication 12, **caractérisé en ce que** l'élément de guidage (17) présente approximativement la moitié de l'épaisseur de paroi des éléments de renforcement (11, 12).

14. Elément médian de puits selon les revendications 1 à 13, **caractérisé en ce qu'**il se compose d'un matériau pouvant être traité par voie thermoplastique.

15. Elément médian de puits selon les revendications 1 à 14, **caractérisé en ce qu'**il est approximativement brun orangé.
